# EUROPÄISCHE PATENTSCHRIFT

(11) **EP 1 497 556 B1**
(45) Veröffentlichungstag und Bekanntmachung des Hinweises auf die Patenterteilung: **16.11.2005**
(21) Anmeldenummer: 03815067.8
(22) Anmeldetag: 20.12.2003
(51) Int. Cl.: F03D 7/04, F03D 7/02

(54) **BETRIEBSFÜHRUNGSSYSTEM FÜR EINE WINDENERGIEANLAGE**
MANAGEMENT SYSTEM FOR THE OPERATION OF A WIND TURBINE
SYSTEME DE GESTION DE FONCTIONNEMENT POUR UNE EOLIENNE

(30) Priorität: 11.01.2003 DE 10300733
(43) Veröffentlichungstag der Anmeldung: 19.01.2005
(73) Patentinhaber: Repower Systems AG, 22335 Hamburg (DE)
(72) Erfinder: STEUDEL, Dirk, 24116 Kiel (DE)
(74) Vertreter: Emmel, Thomas
(86) Internationale Anmeldenummer: PCT/EP2003/014690
(87) Internationale Veröffentlichungsnummer: WO 2004/063566

(56) Entgegenhaltungen:
- WO-A-97/09531
- DE-A- 10 127 451
- DE-A- 19 844 258

## Beschreibung

Die Erfindung betrifft ein Betriebsführungssystem für eine Windenergieanlage, über das eine Leistungsabgabe der Anlage geregelt wird.

Gattungsgemäße Betriebsführungssysteme werden in Windenergieanlagen verwendet, die einen Rotor mit wenigstens einem Rotorblatt aufweisen, wobei das Rotorblatt in einem einstellbaren Rotorblattwinkel zu dem Rotor angeordnet ist. Das Betriebsführungssystem regelt innerhalb eines vorgegebenen Windgeschwindigkeitsbereiches die Rotordrehzahl unter Verstellung des Rotorblattwinkels zur Einstellung einer Nennleistung.

Der Betrieb einer Windenergieanlage ist so gestaltet, dass neben der Amortisierung der Anlage auch ein möglichst großer BriragsüberschuB erwirtschaftet wird. Das heißt, die Anlage soll so betrieben werden, dass möglichst viel Leistung in das öffentliche Stromnetz eingespeist werden kann, wodurch entsprechend der Ertrag der Anlage gesteigert wird. Aus der DE 101 27 451 Al ist ein Verfahren zur Steuerung einer Windenergieanlage bekannt, bei dem eine Betriebseinstellung innerhalb vorgegebener Grenzen variiert wird. Durch eine Variation der Betriebseinstellung soll die optimale Einstellung ermittelt werden, mit der ein Maximalertrag erreicht werden kann.

Gegenüber dem Erfordernis, möglichst viel Ertrag aus der Windenergieanlage herauszuholen, steht das Erfordernis, die Anlage so zu betreiben, dass sie während des Betriebes nicht beschädigt oder sogar zerstört wird. Dies betrifft insbesondere den Betrieb der Anlage bei hohen Windgeschwindigkeiten. Der Betrieb einer Windenergieanlage kann bei zu hohen Windgeschwindigkeiten aufgrund der starken mechanischen Belastung zu der Zerstörung der Anlage führen. Gattungsgemäße Betriebsführungssysteme sind daher so ausgebildet, daß sie ab einer definierten Abschaltwindgeschwindigkeit die Anlage abschalten, wobei das Abschalten der Anlage vorzugsweise nicht abrupt, sondern durch langsame Reduzierung der Leistung erfolgt. Ein gattungsgemäßes Betriebsführungssystem ist z.B. aus der DE 195 32 409 Al bekannt.

Auch aus der DE 198 44 258 Al ist ein Betriebsführungssystem bekannt, über das die Leistung bei Erreichen einer vorgegebenen Windgeschwindigkeit reduziert wird. Hierbei wird die Reduktion der Leistung ebenfalls durch eine Verstellung des Rotorblattwinkels erreicht. Jedoch wird die Leistungsreduktion bereits bei Erreichen einer Grenzwindgeschwindigkeit eingeleitet, wobei die Grenzwindgeschwindigkeit unterhalb der Abschaltwindgeschwindigkeit liegt.

Mit der Leistungsreduktion soll erreicht werden, daß die mit zunehmender Windgeschwindigkeit steigenden mechanischen Lasten auf die Anlage reduziert werden, wodurch die Anlage weniger stark dimensioniert ausgelegt werden muß und damit die Kosten vermindert werden können.

Bei beiden oben beschriebenen Betriebsführungssystemen wird mit der Reduktion der Leistung ab Erreichen eines definierten windgeschwindigkeitsabhängigen Grenzwerts begonnen. Dieser beruht auf der gemessenen Windgeschwindigkeit. Die Messung der Windgeschwindigkeit erfolgt in der Regel mit einem Gondelanemometer. Dieses Meßverfahren ist relativ ungenau und damit kein guter Indikator für die Belastung der Anlage.

Der Grenzwert, ab dem das Betriebsfiihrungssystem die Leistung einer Windenergieanlage reduziert, sollte daher nicht aufgrund der gemessenen Windgeschwindigkeit erfolgen, sondern aufgrund einer Eingangsgröße, die physikalisch und steuerungstechnisch leichter zu erfassen ist.

Aufgabe der vorliegenden Erfindung ist ein Betriebsführungssystem zu schaffen, daß einen Grenzwert mit den oben genannten Eigenschaften verwendet.

Gelöst wird die Aufgabe mit einem Betriebsführungssystem, das die Merkmale des Anspruches 1 aufweist.

Wie bei dem gattungsgemäßen Betriebsführungssystem wird das erfindungsgemäße Betriebsführungssystem in Windenergieanlagen verwendet, die einen Rotor mit verstellbaren Rotorblättern aufweisen, wobei das Betriebsführungssystem so ausgebildet ist, daß es innerhalb eines vorgegebenen Windgeschwindigkeitsbereiches die Rotordrehzahl unter Verstellung des Rotorblattwinkels zur Einstellung einer Nennleistung regelt.

Dafür wird, wenn mit zunehmender Windgeschwindigkeit die Nenndrehzahl erreicht wird, der Rotorblattwinkel vergrößert, wodurch, wie oben bereits erwähnt, die Einhaltung der Nenndrehzahl und damit auch der Nennleistung trotz zunehmender Windgeschwindigkeit erzielt wird. Das Betriebsführungssystem beginnt mit der Leistungsreduktion, wenn ein definierter windgeschwindigkeitsabhängiger Grenzwert erreicht wird.

Das erfindungsgemäße Betriebsführungssystem verwendet dabei als Grenzwert einen definierten Rotorblattgrenzwinkel. Bei dem Rotorblattgrenzwinkel handelt es sich um den Rotorblattwinkel, der sich zur Einstellung der Nennleistung bei einer Windstärke, die der Abschaltwindgeschwindigkeit entspricht, ergibt. Der Rotorblattgrenzwinkel ist vom jeweils verwendeten Rotorblatt abhängig und kann empirisch durch Messungen und/ oder Simulationen ermittelt werden.

Die Verwendung des Rotorblattgrenzwinkels als Grenzwert bietet den Vorteil, daß es sich dabei um eine Eingangsgröße handelt, die steuerungstechnisch leicht zu erfassen ist, da der Winkel des Rotorblatts aufgrund der Einstellung der Nennleistung bereits bekannt ist. Weiterhin ist der Rotorblattgrenzwinkel ein direkter Indikator für die momentane Belastung der Anlage und stellt somit eine zuverlässigere Eingangsgröße für die Reduktion der Belastung dar als die indirekt gemessene Windgeschwindigkeit.

In einer vorteilhaften Ausgestaltung der Erfindung ist das Betriebsführungssystem gemäß Anspruch 2 so ausgebildet, daß die Leistungsreduktion nach Überschreiten des Rotorblattgrenzwinkels durch weitere Verstellung des Rotorblattwinkels erfolgt. Dabei wird der Winkel des Rotorblatts zu dem Rotor gemäß Anspruch 3 vergrößert.

Dies bietet den Vorteil, daß die Anlage bei Erreichen der Abschaltwindgeschwindigkeit nicht sofort abgeschaltet wird, sondern die Leistungsabgabe langsam reduziert wird, bis eine Abschaltleistung erreicht ist und die Anlage vom Netz genommen werden kann. Diese Vorgehensweise bietet zum einen den Vorteil einer besseren Netzverträglichkeit. Zum anderen kann auf diese Weise die Leistungskurve erweitert und der Energieertrag verbessert werden.

In einer weiteren vorteilhaften Ausgestaltung ist das Betriebsführungssystem gemäß Anspruch 4 so ausgebildet, daß der Rotorblattwinkel bis zu dem Erreichen der Nennleistung weitgehend konstant gehalten wird.

Nach dem Erreichen der Nennleistung ist das Betriebsführungssystem gemäß Anspruch 4 so ausgebildet, daß der Rotorblattwinkel in Abhängigkeit von der Windgeschwindigkeit eingestellt wird, d.h. daß der Rotorblattwinkel je nach der Höhe der Windgeschwindigkeit vergrößert oder verkleinert wird, um die Nennleistung konstant zu halten.

Bei dem erfindungsgemäßen Betriebsfiihrungssystem erfolgt die Regelung der Leistungsabgabe einer Windenergieanlage oberhalb der Abschaltgeschwindigkeit in vorteilhafter Weise nur in Abhängigkeit vom Rotorblattwinkel. Zusätzliche Meßgrößen, wie z.B. die Windgeschwindigkeit, die aufgrund ungünstiger Bedingungen schwer zu ermitteln und daher oft ungenau sind, sind nicht mehr erforderlich.

Im folgenden soll die Erfindung anhand zweier Abbildungen näher erläutert werden:
- Fig. 1:: zeigt eine Frontansicht auf eine Windenergieanlage,
- Fig. 2:: zeigt eine schematische Darstellung der Regelung der Nennleistung in Abhängigkeit vom Rotorblattwinkel

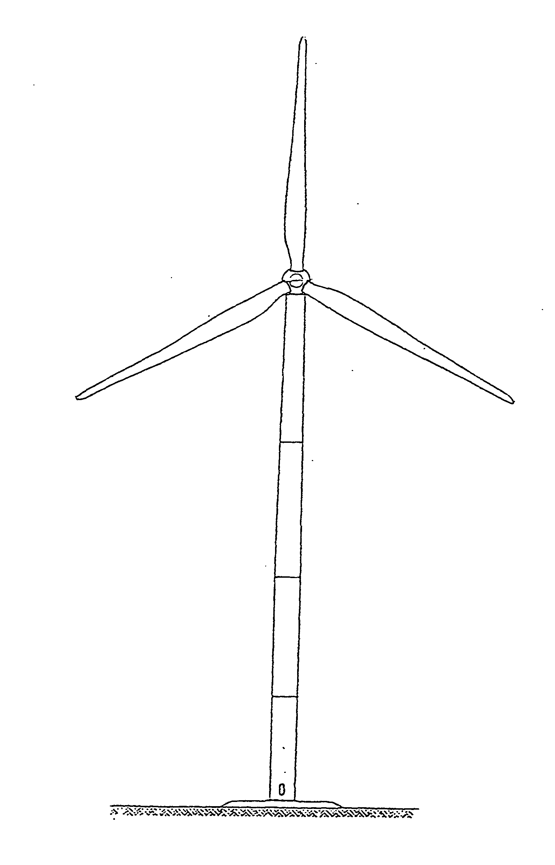

Die Figur 1 zeigt die Draufsicht auf eine Windenergieanlage (1) mit einem auf einem Boden aufgestellten Turm (2), an dessen Spitze eine drehbare Gondel einen um eine waagerechte Achse umlaufenden Rotor (3) trägt, der aus drei Rotorblättern (5) besteht, wobei die Rotorblätter in einem einstellbaren Rotorblattwinkel zu dem Rotor angeordnet sind.

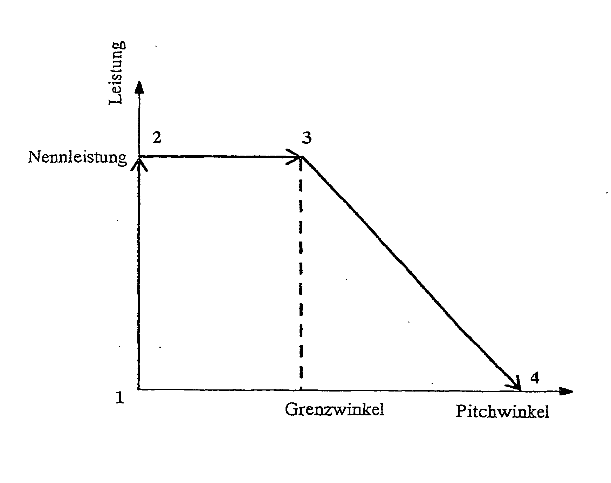

Die Figur 2 zeigt eine schematische Darstellung der Regelung der Nennleistung in Abhängigkeit vom Rotorblattwinkel, wobei davon auszugehen ist, daß die Windgeschwindigkeit stetig ansteigt.

Im Punkt 1 der Fig. 2 fährt die Anlage an. Zwischen Punkt 1 und Punkt 2 fährt die Anlage eine Drehmoment-Drehzahlkennlinie eines in der Anlage vorgesehenen Generators ab, bis die Nennleistung erreicht ist. Der Rotorblattwinkel wird in diesem Stadium nicht geändert. In Punkt 2 hat die Anlage die Nennleistung erreicht.

Nach Überschreiten des Punktes 2 ist die Windgeschwindigkeit größer als für die Erzeugung der Nennleistung erforderlich, daher beginnt das Betriebsführungssystem mit der Leistungsregelung über den Rotorblattwinkel. Hierfür vergrößert das Betriebsführungssystem den Rotorblattwinkel, wodurch der Auftrieb der Rotorblätter vermindert und die Rotordrehzahl und damit die Leistung reduziert wird. Über die Verstellung des Rotorblattwinkels kann somit eine konstante Nennleistung abgegeben werden.

Wie in Fig. 2 zwischen den Punkten 2 und 3 dargestellt, wird der Rotorblattwinkel mit zunehmender Windgeschwindigkeit stetig vergrößert, damit die Anlage eine konstante Nennleistung abgibt. In Punkt 3 erreicht die Windgeschwindigkeit einen Wert, bei dem das Betriebsführungssystem das Rotorblatt in einen Winkel verstellt, der einem in Fig. 2 dargestellten Grenzwinkel entspricht. Das Betriebsführungssystem beginnt mit dem Überschreiten des Grenzwinkels, die Leistung der Anlage zu reduzieren. Hierfür wird der Rotorblattwinkel so vergrößert, daß die Abgabe der Leistung stetig reduziert wird, bis wie in Fig. 2 in Punkt 4 eine Abschaltleistung der Anlage erreicht wird.

In weiteren Ausgestaltungen der Erfindung kann die Reduzierung der Leistung auch in anderer Form abnehmen z.B. stufenförmig oder exponentiell.

## Patentansprüche

1. Betriebsführungssystem für eine Windenergieanlage (1), über das eine Leistungsabgabe der Anlage (1) geregelt wird, wobei die Windenergieanlage (1) einen Rotor (3) mit wenigstens einem Rotorblatt (5) aufweist, das in einem einstellbaren Rotorblattwinkel zu dem Rotor (3) angeordnet ist und das Betriebsführungssystem innerhalb eines vorgegebenen Windgeschwindigkeitsbereichs die Rotordrehzahl unter Verstellung des Rotorblattwinkels zur Einstellung einer Nennleistung regelt und ab einem definierten windgeschwindigkeitsabhängigen Grenzwert die Leistung reduziert, **dadurch gekennzeichnet, daß** der Grenzwert ein definierter Rotorblattgrenzwinkel ist.

2. Betriebsführungssystem nach Anspruch 1, **dadurch gekennzeichnet, daß** es zur Reduzierung der Leistung den Rotorblattwinkel verstellt.

3. Betriebsführungssystem nach Anspruch 2, **dadurch gekennzeichnet, daß** es zur Reduzierung der Leistung den Rotorblattwinkel vergrößert.

4. Betriebsführungssystem nach Anspruch 1, **dadurch gekennzeichnet, daß** es den Rotorblattwinkel bis zu dem Erreichen der Nennleistung konstant hält.

5. Betriebsführungssystem nach Anspruch 1, **dadurch gekennzeichnet, daß** es nach dem Erreichen der Nennleistung den Rotorblattwinkel in Abhängigkeit von der Windgeschwindigkeit einstellt, um die Nennleistung konstant zu halten.

## Claims

1. A management system for the operation of a wind turbine (1), which regulates the power output of the turbine (1), wherein the wind turbine (1) comprises a rotor (3) with at least one rotor blade (5) that is positioned at an adjustable angle to the rotor (3) and wherein the management system regulates the rotor speed within a predefined wind speed range by varying the rotor blade angle in order to set a nominal output and reduces the output in excess of a defined wind-speed-dependent threshold value, **characterized in that** the threshold value is a defined rotor blade limiting angle.

2. A management system according to Claim 1, **characterized in that** it varies the rotor blade angle in order to reduce the output.

3. A management system according to Claim 2, **characterized in that** it increases the rotor blade angle in order to reduce the output.

4. A management system according to Claim 1, **characterized in that** it maintains the rotor blade angle at a constant value until the nominal output is reached.

5. A management system according to Claim 1, **characterized in that**, once the nominal output has been reached, it adjusts the rotor blade angle in relation to the wind speed in order to maintain the nominal output at a constant value.

## Revendications

1. Système de gestion de fonctionnement d'éolienne (1) permettant de régler la puissance débitée de l'éolienne (1), l'éolienne (1) présentant un rotor (3) muni d'au moins une pale (5) formant par rapport au rotor (3) un angle d'incidence de pale réglable, le système de gestion de fonctionnement réglant, dans une plage prédéfinie de vitesse du vent, la vitesse de rotation du rotor par ajustage de l'angle d'incidence de pale de sorte à régler la puissance débitée sur une puissance nominale, et réduisant la puissance au-delà d'une valeur limite définie et dépendante de la vitesse du vent, **caractérisé en ce que** la valeur limite est un angle d'incidence de pale limite défini.

2. Système de gestion de fonctionnement selon la revendication 1, **caractérisé en ce qu'**il modifie l'angle d'incidence de pale pour réduire la puissance débitée.

3. Système de gestion de fonctionnement selon la revendication 2, **caractérisé en ce qu'**il augmente l'angle d'incidence de pale pour réduire la puissance débitée.

4. Système de gestion de fonctionnement selon la revendication 1, **caractérisé en ce qu'**il maintient constant l'angle d'incidence de pale jusqu'à atteinte de la puissance nominale.

5. Système de gestion de fonctionnement selon la revendication 1, **caractérisé en ce que**, après atteinte de la puissance nominale, il règle l'angle d'incidence de pale en fonction de la vitesse du vent pour maintenir constante la puissance nominale.
